# NEUE EUROPÄISCHE PATENTSCHRIFT

(11) **EP 1 887 018 B2**
(45) Veröffentlichungstag und Bekanntmachung des Hinweises auf die Entscheidung über den Einspruch: **20.01.2016**
(45) Hinweis auf die Patenterteilung: 29.02.2012
(21) Anmeldenummer: 07013387.1
(22) Anmeldetag: 09.07.2007
(51) Int. Cl.: C08F 218/08, C09J 131/04, C08L 31/04

(54) **Vinylestercopolymer-Dispersionen, Verfahren zu deren Herstellung und Verwendung**
Vinyl ester copolymer dispersions, method for their manufacture and use
Dispersions de copolymères de vinylester, leur procédé de fabrication et d'utilisation

(30) Priorität: 08.08.2006 DE 102006037317
(43) Veröffentlichungstag der Anmeldung: 13.02.2008
(73) Patentinhaber: Celanese Emulsions GmbH, 61476 Kronberg/Ts. (DE)
(72) Erfinder: Müller, Harmin, Dr., 65719 Hofheim (DE); Faust, Hans Uwe, 65835 Liederbach (DE); Schäfer, Martin, Dr., 76829 Landau i.d. Pfalz (DE)
(74) Vertreter: Ackermann, Joachim

(56) Entgegenhaltungen:
- EP-A- 0 050 548
- EP-A- 1 510 529
- EP-A2- 0 279 384
- EP-A2- 0 761 697
- EP-A2- 1 153 979
- WO-A1-2005/047204
- US-A- 4 921 898
- US-A- 5 070 134
- US-A- 5 679 735
- US-A- 5 747 578
- US-A- 6 063 858
- US-A1- 2002 045 692
- US-A1- 2003 164 478
- US-A1- 2004 048 961
- Broschüre "The World of Emulsions", veröffentlicht im September 1999
- Technical Data Sheet Mowilith DM 132, veröffentlicht im März 2006
- Messprotokoll zur Partikelgrößenmessung von Mowilith DM 132, datiert mit 05.12.2001
- Versuchsbericht zur Vergleichbarkeit der Messung von Partikelgrößen
- Messprotokoll zur Partikelgrößenmessung von Mowilith DM 132, erhalten von der Firma Gludan am 03.12.2004, datiert mit 27.10.2011
- Prüfungsnotiz zur Vollanalyse von Airflex 7200 der Fa. APCI, datiert mit 05.09.1996
- Technical Data Sheet Airflex 7200 Emulsion, datiert mit 2001
- Messprotokoll zur Partikelgrößenmessung Beispiel 1 von D3
- Messprotokoll zur Partikelgrößenmessung Beispiel 2 von D3
- Broschüre "Airvol Polyvinyl Alcohol", veröffentlicht 1998
- Product Data Sheet IGEPAL CO-887, veröffentlicht Februar 2009
- Messprotokoll zur Partikelgrößenmessung Beispiel 1, Run 8 von D4
- Zusammenfassung der Messungen zur Bestimmung der Fließgrenze
- Vortrag "Influence of Emulsion Polymer Design on High Speed Liquid Adhesive, 10.2005
- Übersicht der Vorträge bei ASC Fall 2005 Convention and Exposition, 9-12.10.2005

## Beschreibung

Die vorliegende Erfindung betrifft die Verwendung von Copolymer-Dispersionen auf der Basis von Vinylestern, die sich ausgezeichnet für die Formulierung von Klebstoffen eignen, in Klebstoffen für den Düsenauftrag.

Dispersionsklebstoffe zur Verklebung von Papier in der Fließbandfertigung von Faltschachteln, Briefumschlägen, Prospekten oder Zigaretten werden oft durch ein rotierendes Segmentrad, durch eine Walze oder mittels eines Düsenauftragssystems auf das Substrat appliziert.

Bei diesen Applikationsarten, insbesondere beim rotierenden Segmentrad und der Walze, führen Verunreinigungen durch Klebstoff, welche durch "Spritzen" oder unpräzisen Klebstoffauftrag verursacht werden, zu Problemen in der Fertigung. Gelangt Klebstoff auf das Transportband, so kann dies zur Anhaftungen des gefertigten Materials führen, was zu Ausfallzeiten der Maschine, verbunden mit aufwendigen Reinigungsarbeiten führt.

Besonders vorteilhaft ist die Verwendung von Düsen, da zum einen die Geometrie des zu verklebenden Produktes leicht angepasst werden kann und zum anderen Klebstoff eingespart werden kann.

Bei der Applikation eines Klebstoffes mittels Düsenauftragssystem treten Verschmutzungen dadurch auf, daß sich im Verlauf der Zeit zapfenförmige Ablagerungen von getrocknetem Klebstoff an der Austrittsstelle der Düse ausbilden und den aus der Düse austretenden Klebstoffstrahl ablenken. Das hat eine starke Variation bei der Präzision des Auftrags zur Folge. Eine Variation in der Präzision des Leimauftrags führt in der Folge zu einer Verschmutzung der Anlage oder sogar zum Stillstand.

Bei dem Auftrag eines Klebstoffes mittels Düsenauftragssystem wird der Klebstoff mittels einer Pumpe durch ein geschlossenes Leitungssystem gefördert. Am Ende des Leitungssystems sitzt eine Düse mit einem schnell öffnendem und schließendem Ventil. Da die zu verklebenden Papierteile auf einem Förderband mit sehr hoher Laufgeschwindigkeit von heute etwa 100 bis 800 m/min transportiert werden, muß das Ventil eine kurze Taktzeit besitzen. Möchte man beispielsweise bei einer Bandgeschwindigkeit von 100 m/min einen Punktauftrag mit einem Punkt/cm auftragen, so werden pro Sekunde 166 Punkte appliziert. Die Öffnungszeit des Ventils liegt also hier im Bereich < 6 msec. Bei einer Bandgeschwindigkeit von 250 m/s werden 415 Punkte pro Sekunde appliziert, was einer Öffnungszeit von < 2,5 ms entspricht.

Düsenapplikationssysteme mit Schaltfrequenzen von bis zu 1000/Sekunde sind heute Stand der Technik. Die hohe Taktfrequenz der Düsenventile hat zur Folge, daß
- der Klebstoff im Inneren der Düse extrem hohen Scherkräften ausgesetzt wird, und
- pro Zeiteinheit z.B. innerhalb einer Stunde über 1.000.000 einzelne Tropfen durch eine Düse appliziert werden.

Bedingt durch die hohe Materialscherung und die kurze Zeit, die zur Bildung eines einzelnen Tropfens durch Öffnen und Schließen des Ventils gegeben ist, können bei der Tropfenbildung am Ausgang der Düse einzelne kleinere Tropfen, sogenannte "Satellitentropfen" entstehen, die aufgrund deren hoher Anzahl am Ausgang der Düse über die Zeit einen zapfenförmigen Verschmutzungsaufbau verursachen (sogenannter Aufbau = "dirt formation").

Die Frage, wie "sauber" ein Tropfen bei diesem Extrusionsvorgang gebildet wird, sollte von den physikalisch-chemischen Eigenschaften der Dispersion, wie beispielsweise Rheologie, Oberflächenspannung, Scherstabilität, Fließgrenze, und Elastizität abhängen.

Im Stand der Technik sind mehrere Verfahren zum Auftrag von Klebstoffen aus Düsen beschrieben.

So beschreibt die EP-A-523,589 ein Verfahren zum Aufbringen von Klebstoffpunkten mittels Düsen. Diese Schrift beschreibt ein ausgewähltes Auftragsverfahren sowie eine geeignete Vorrichtung dafür. Zu den einzusetzenden Klebstoffen findet man lediglich allgemeine Ausführungen, beispielsweise den Einsatz von Acrylatklebstoffen.

EP-A-621,289 beschreibt die Verwendung von ausgewählten wässrigen Vinylester-Copolymerdispersionen als Klebmittel. Es handelt sich um Emulsionspolymerisate mit 1-10 Gew.% an thermisch vernetzbaren Comonomeren. Typische Copolymere sind Typen auf der Basis von Vinylacetat, Ethylen und N-Methylolacrylamid. Als eine mögliche Art des Aufbringens des Klebstoffs auf das Substrat wird die Düsenapplikation beschrieben.

EP-A-1,113,031 offenbart ein Verfahren zur Klebebindung von zusammengetragenen Papierbögen. Die Beleimung kann mittels Düsenauftrag erfolgen. Als Kleber wird eine wässrige Dispersion eines anionischen, modifizierten Polyurethanelastomeren eingesetzt, beispielsweise ein Vinylacetat-Ethylen-PolyurethanCopolymer.

DE-A-102 24 128 beschreibt ein ausgewähltes Verfahren zu Düsenauftrag von Beschichtungen auf Oberflächen. Als mögliche Klebstoffe werden unterschiedlichste Typen empfohlen, beispielsweise Schmelz-, Lösungs- und Dispersionskleber.

In der EP-A-322,175 wird die Emulsionspolymerisation von Polyvinylalkoholstabilisierten Vinylestern gegebenenfalls mit weiteren Comonomeren, wie Ethylen, Acrylsäure oder Vinylversataten in Gegenwart von ausgewählten, mit Wasser mischbaren Kettenüberträgern beschrieben. Der Einsatz der Produkte als Klebstoffe wird empfohlen, wobei eine Auftragsmethode die Düsenapplikation ist.

GB-A-1,438,993 offenbart Vinylacetat-Ethylen-Copolymere, die mit ausgewählten Monomeren gepfropft werden. Die Produkte werden für den Einsatz als Schmelz-, Lösungs- und Dispersionskleber empfohlen, wobei eine Auftragsmethode die Düsenapplikation ist.

In der EP-A-420,998 werden wässrige Schmelzklebstoff-Suspensionen oder -Emulsionen beschrieben, die sich von Vinylacetat und gegebenenfalls weiteren Comonomeren, wie Ethylen, Schutzkolloiden und Emulgatoren ableiten und die durch Verwendung eines monomerlöslichen Initiators hergestellt worden sind. Diese Klebstoffe eignen sich zum Sprühauftrag durch Düsen.

Die WO-A-03/010,256 beschreibt wasserlösliche oder-dispergierbare Schmelzkleber, die durch Pfropfcopolymerisation von ausgewählten olefinisch ungesättigten Monomeren, unter anderem von Vinylestern, auf Polyalkylenoxide hergestellt werden. Als eine mögliche Auftragsmethode wird die Düsenapplikation empfohlen.

In der EP-A-1,287,908 werden wässrige Polymerdispersionen für Sprayauftrag beschrieben. Dazu zählen unter anderem Emulgator- oder Schutzkolloid-stabilisierte Polyvinylacetat- und Ethylen-Vinylacetat-Copolymer Dispersionen. Weitere Einzelheiten zu den Klebstoffsystemen sind nicht offenbart.

Die EP-A-1,510,529 offenbart ein Verfahren zur Herstellung von multimodalen Polymerdispersionen. Dabei werden Mischungen ausgewählter Schutzkolloide eingesetzt. Die beschriebenen Polymerdispersionen weisen mit etwa 20000 mPa*s (bei 21 °C) vergleichsweise hohe Viskositäten auf und sind für Düsenapplikationen ungeeignet.

DE-A-199 62 566 beschreibt ein Verfahren zur Herstellung von Dispersionen auf der Basis von mit Polyvinyl-alkoholen stabilisierten Vinylester-(Meth)acrylsäure-Mischpolymerisaten. Dabei wird ein Teil der Monomeren vorgelegt und die Polymerisation wird bei Temperaturen von mindestens 60°C durchgeführt. Die erhaltenen Dispersionen lassen sich in Verbindung mit hydraulisch abbindenden Bindemitteln, als Alleinbindemittel für Beschichtungsmittel und Klebmittel oder als Bindemittel für Texitilien und Papier einsetzen. Aus den Dispersionen können durch Versprühen redispergierbare Dispersionspulver hergestellt werden. Der Einsatz als Klebstoff für schnelllaufende Düsen ist nicht offenbart. Informationen über die Teilchengrößenverteilung der Dispersionen sind dem Dokument nicht zu entnehmen. Aufgrund der Herstellungsbeispiele ist jedoch davon auszugehen, dass die Dispersionen die üblichen Quotienten von Gewichtsmittel zu Zahlenmittel der Teilchengrößen d_{w}/dₙ aufweisen, nämlich deutlich unterhalb von 2;5 liegen.

WO-A-99/42,504 offenbart ein Verfahren zur Herstellung von Vinylester-Copolymerisatdispersionen, die durch Polyvinyla kohol und einen ausgewählten Emulgator stabilisiert sind. Das Verfahren ist gekennzeichnet durch das Dosieren der Monomermischung im Temperaturbereich zwischen 67 und 80°C bei ausgewählten Dosiergeschwindigkeiten. Die erhaltenen Dispersionen können als Beschichtungsmittel im Baubereich eingesetzt werden. Auch diesem Dokument sind keine Informationen über die Teilchengrößenverteilung der Dispersionen zu entnehmen. Aufgrund der Herstellungsbeispiele ist jedoch davon auszugehen, dass auch diese Dispersionen die üblichen Quotienten von Gewichtsmittel zu Zahlenmittel der Teilchengrößen d_{w}/dₙ aufweisen.

EP07013387 bezieht sich auf einen Vinylacetatcopolymer-Dispersionsklebstoff, der durch eine molekulare Massenverteilung des Polymers zwischen 10.000 und 300.000 und insbesondere durch eine Aushärtezeit bzw. Abbindegeschwindigkeit von kleiner als 10 Sekunden gekennzeichnet ist.

EP1510529 betrifft ein Verfahren zur Herstellung von multimodalen Polymerdispersionen, die für die Herstellung von Klebstoffen verwendet werden können. Um eine gute Maschineneinsatztauglichkeit zu haben, sollten diese Dispersionen u. a. einen hohen Feststoffgehalt und sehr geringe Viskosität aufweisen.

Handelsübliche Dispersionen zeigen unter definierten Laborbedingungen nach zwei Stunden einen Verschmutzungsaufbau an der Düse von mehr als 4 mm bis hin zur kompletten Verschmutzung. In der Praxis heißt das, daß unter Umständen mehrfach am Tag ein etwa fünfminütiges Anhalten der Maschine zur Reinigung der Düsen notwendig wird mit entsprechender Unterbrechung der Produktion.

Zudem muß der Klebstoff auf immer schwieriger zu verklebenden Substraten aufgebracht werden können, da zum Beispiel Verpackungen für Luxusgüter, wie Pralinen, Parfüms oder Weinflaschen, durch Glanzlacke veredelt werden. Solche Lacke führen zu hydrophoben Oberflächen, die mit herkömmlichen Klebstoffen für Düsenanwendungen schwer zu verkleben sind.

Ausgehend von diesem Stand der Technik bestand die Aufgabe der vorliegenden Erfindung darin, einen Dispersionsklebstoff für den Einsatz in Düsenapplikationsverfahren zu verwenden, der die Nachteile des Standes der Technik nicht mehr aufweist. Der erfindungsgemäß verwendete Dispersionsklebstoff besitzt günstige chemisch-physikalischen Eigenschaften, so daß sich ein signifikant günstigeres Aufbauverhalten zeigt; außerdem besitzt der erfindungsgemäß eingesetzte Dispersionsklebstöff vergleichbare oder sogar bessere Abbindegeschwindigkeiten als die bislang eingesetzten Produkte. Der erfindungsgemäß eingesetzte Dispersionsklebstoff lässt sich zudem so herstellen, dass er auch schwierig zu verklebende hydrophobe Oberflächen verkleben kann bei gleichzeitig hohem Wärmestand.

Durch den erfindungsgemäßen Einsatz des Dispersionsklebstoffs werden die Stillstandszeiten der Anlagen erheblich reduziert, beispielsweise um mindestens 50 %. Auch soll unter definierten Laborbedingungen ein deutlich reduzierter Verschmutzungsaufbau erfolgen, beispielsweise nach zwei Stunden ein Verschmutzungsaufbau von < 3 mm.

Die vorliegende Erfindung betrifft die Verwendung einer wässrigen Vinylestercopolymer-Dispersion stabilisiert mit einer Mischung von Polyvinylalkoholen in Kombination mit mindestens einem nichtionischen Emulgator gemäss Anspruch 1, die eine Viskosität von kleiner als 8000 mPa*s, gemessen bei 23°C mit dem Brookfield Viskosimeter, Spindel 5, 20 Upm, ein Gewichtsmittel d_{w} der Teilchengrößen von 0,5 bis 10 µm und einen Quotienten von Gewichtsmittel zu Zahlenmittel der Teilchengrößen d_{w}/dₙ von mindestens 2,5 aufweist und das Polymere eine Glasübergangstemperatur zwischen -30 und + 15 °C besitzt, als Klebstoff zur punktuellen oder strichförmigen Düsenapplikation auf Substrate.

Die erfindungsgemäß eingesetzte Vinylestercopolymer-Dispersion besitzt eine sehr breite Verteilung der Teilchengrößen. Es kann sich hier um eine breite Verteilung mit nur einem Maximum bzw. auch um eine breite Verteilung mit mehreren Maxima (mehrmodale Verteilung) der Dispersion handeln. Wichtig ist, dass die Gesamtverteilung breit ist. Diese Eigenschaften werden durch den Quotienten d_{w}/dₙ ausgedrückt. Die Gewichts- und Zahlenmittel der Teilchengrößen werden für die Zwecke dieser Beschreibung mit dem Mastersizer Microplus von Malvern gemessen, wobei die Auswertung "polydispers, Mie" verwendet wird.

Die Viskosität der erfindungsgemäßen Vinylester-Copolymerdispersion beträgt vorzugsweise 100 bis 8000 mPa*s, insbesondere 200 bis 4000 mPa*s und ganz besonders bevorzugt 400 bis 3000 mPa*s. Für die Zwecke dieser Beschreibung erfolgt die Viskositätsmessung mit dem Brookfield-Viskosimeter bei 23°C unter Verwendung der Spindel 5, bei 20 Umdrehungen pro Minute (Upm). Selbstverständlich kann die Dispersion auch weiter verdünnt werden, um auf der Düse angewendet werden zu können. Dabei erniedrigt sich sowohl der Feststoffgehalt als auch die Viskosität.

Das Gewichtsmittel der Teilchengrößen d_{w} der erfindungsgemäß eingesetzten Vinylester-Copolymerdispersion beträgt vorzugsweise 0,5 bis 6,0 µm, insbesondere 0,8 bis 5,0 µm, und der Quotient d_{w}/dₙ beträgt vorzugsweise 2,5 bis 20,0, insbesondere 3,0 bis 15,0.

Die Vinylestercopolymerisate der erfindungsgemäß eingesetzten Dispersionen weisen Glasübergangstemperaturen von typischerweise von -30 bis + 15 °C, bevorzugt von -20 bis + 10°C, besonders bevorzugt von -20 bis +5°C auf. Bei Copolymeren mit heterogener Morphologie, beispielsweise Kern-Schale Morphologie, reicht es aus, wenn eine der Phasen. Glasübergangstemperaturen von -30 bis + 15°C aufweist. Im Rahmen der vorliegenden Beschreibung werden Glasübergangstemperaturen durch DSC ermittelt, mit einer Aufheizgeschwindigkeit von 10 K/Minute.

Für die Anwendung wird die erfindungsgemäße Vinylestercopolymer-Dispersion durch Düsen auf ein Substrat aufgebracht. Dazu wird der Düse in an sich bekannterweise die wässrige Vinylestercopolymer-Dispersion, die typischerweise einen Feststoffgehalt von mindestens 40 Gew. % aufweist, zugeführt und von der Düse in Form eines Strahls oder eines in vorbestimmter Weise unterbrochenen Strahls auf das Substrat aufgetragen. Dieser Strahl hat vorzugsweise eine Dicke von kleiner als 6 mm, besonders bevorzugt von 0,1 bis 2 mm.

Erfindungsgemäß können sämtliche Düsenapplikationssysteme eingesetzt werden, insbesondere Systeme mit hohen Schaltfrequenzen von ca. bis zu 500 Punkten/Sekunde.

So lässt sich der Dispersionsklebstoff beispielsweise durch HHS Düsenauftragssysteme der Fa. HHS, Krefeld aufbringen. Dabei kann es sich um D-Ventile oder um Vario-Ventile handeln. Typischerweise arbeiten diese Systeme mit folgenden technischen Daten:
D-Ventile: Leimdruck bis 35 bar; Leimviskosität bis 2500 mPa*s; Schaltfrequenz bis 500 / sec; und Düsendurchmesser 0,4 mm.
Vario-Ventile: Leimdruck bis 6 bar; Leimviskosität bis 500 mPa*s; Schaltfrequenz bis 1000 / sec; und Düsendurchmesser 0,4 mm.

Weitere geeignete Düsenauftragssysteme sind die Systeme der ECNS-Serie der Fa. Robatech Glueing Technologie. Diese Systeme weisen typischerweise folgende technische Daten auf: Leimdruck 1-6 bar; Leimviskosität max. 500 mPa*s; Schaltfrequenz max. 600 / sec; und Düsendurchmesser 0,1-0,6 mm.

Weitere geeignete Düsenauftragssysteme sind die Systeme der Fa. ITW Dynatec Klebtechnik, Mettmann; der Fa. Reuther, Aichach und der Fa. Nordson Deutschland GmbH, Erkrath.

Mittels der Düsenauftragssysteme wird die Vinylestercopolymer-Dispersion dem Substrat in Form eines Strahls oder eines in vorbestimmter Weise unterbrochenen Strahls appliziert. Beim Auftrag der erfindungsgemäß eingesetzten Vinylestercopolymer Dispersion erfolgt keine Sprühapplikation, sondern es werden Klebstoffstrahlen oder Abschnitte solcher Strahlen auf das Substrat aufgebracht.

Als Substrate eignen sich beliebige miteinander zu verbindende Materialien. Diese können glatte, rauhe oder poröse Oberflächen aufweisen und in verschiedenen Ausformungen vorliegen, beispielsweise als flächige Materialien. Auch hinsichtlich des Materials sind die Substrate keinen Beschränkungen unterworfen. Beispiele für Materialien, aus denen die zu verklebenden Substrate bestehen können, sind Metalle, Kunststoffe, Lackoberflächen, Papier, Textilen, Non-Wovens oder Naturstoffe, wie Holz.

Die zu verklebenden Subtrate können saugfähige Oberflächen oder hydrophobe Oberflächen besitzen: Beispiele für saugfähige Oberflächen sind Papiere einschließlich Pappe und Kartons sowie andere Faservliese. Beispiele für hydrophobe Oberflächen sind Kunststofffolien (z.B. Polyesterfolie, Polyolefinfolie wie beispielsweise Polypropylen oder Polyethylen, Polystyrolfolie, Acetatfolie) oder UV-Lack beschichtete Papiere. Jede beliebige Kombination kann in der Praxis vorkommen.

Die erfindungsgemäß eingesetzten Vinylestercopolymer-Dispersionen eignen sich besonders gut für Klebstoffe zur Anwendung auf Düsen und weisen darüber hinaus eine hohe Abbindegeschwindigkeit und universelle Verklebeeigenschaften auf. Ferner lassen sich die Verklebeeigenschaften durch den Einbau von "weichen" Comonomeren, wie Ethylen und/oder Acrylaten, in das Polymer steuern und weiter optimieren.

Überraschenderweise wurde gefunden, dass durch den erfindungsgemäßen Einsatz der wässrigen Vinylester-Copolymerdispersion mit einer sehr breiten Gesamtteilchengrößenverteilung, die auch mehrmodal sein kann, in Verbindung mit einem ausgewählten Stabilisierungssystem enthaltend Gemische ausgewählter Polyvinylalkohole als Schutzkolloide in Kombination mit nichtionischen und gegebenenfalls ionischen Emulgatoren Dispersionsklebstoffe mit ausgezeichneten Düsenlaufeigenschaften formuliert werden können. Zudem ist die Herstellung sehr einfach.

Bevorzugte erfindungsgemäß eingesetzte Dispersionen sind darüber hinaus durch eine Fließgrenze von 0,2 bis 1,0, vorzugsweise 0,2 bis 0,8 Pa, und insbesondere von 0,3 bis 0,6 Pa gekennzeichnet.

Die Fließgrenze ist der Übergang von der elastischen Deformation in das Fließen und wurde mit Hilfe des Bohlen (neu Malvern) Rheometers CS und dem Meßsystem C - 25 GE bei 25°C bestimmt. Die Startschubspannung betrug dabei 0,025 Pa, die Endschubspannung 2 Pa. Es wurden 100 linear verteilte Meßpunkte bei einer Meßzeit von 60 Sekunden aufgenommen und die Viskosität bei der vorgegebenden Schubspannung bestimmt. Im Übergangsbereich von der elastischen Deformation in das Fließen zeigt die momentane Viskosität ein Maximum, welches ein Indiz für das beginnende Fließen ist. Die Schubspannung bei diesem Maximum entspricht der Fließgrenze.

Die erfindungsgemäß eingesetzten Polymerdispersionen werden durch radikalische Emulsionspolymerisation von wenigstens einem Vinylester einer Carbonsäure gegebenenfalls in Kombination mit weiteren damit copolymerisierbaren ethlyenisch ungesättigten Monomeren hergestellt.

Als Vinylestermonomere kommen typischerweise Vinylester von aliphatischen, gesättigten Carbonsäuren mit einer Kettenlänge von C₁-C₁₈, vorzugsweise einer Kettenlänge von C₁-C₄, in Betracht und oder Kombinationen (z.B. mit Vinylestern des Typs VeoVa). Beispiele für Vinylester gesättigter Carbonsäuren mit einer Kettenlänge von C₁-C₄ bzw. C₅-C₁₈ sind weiter unten aufgeführt.

Als weitere mit Vinylestermonomeren copolymerisierbare ethylenisch ungesättigte Monomere kommen die an sich bekannten radikalisch polymerisierbaren Monomeren in Betracht.

Dabei handelt es sich beispielsweise um aromatische oder aliphatische α, βungesättigte, gegebenenfalls halogen-substituierte Kohlenwasserstoffe, wie Ethen, Propen, 1-Buten, 2-Buten, Vinylchlorid, Vinylidenchlorid wobei Ethen bevorzugt ist.

Weitere Comonomere, die im Copolymerisat Verwendung finden können, sind Comonomere, mit denen die Klebeeigenschaften gezielt eingestellt werden können. Hierzu zählen in erster Linie Ester ethylenisch ungesättigter Mono- oder Dicarbonsäuren mit einwertigen Alkoholen, insbesondere Ester der Acryl- oder Methacrylsäure mit aliphatischen C₁-C₈-Monoalkoholen. Beispiele für besonders bevorzugte Monomere dieses Typs sind Butylacrylat oder 2-Ethylhexylacrylat.

Die genannten Monomere bilden in der Regel die Hauptmönomeren, die in Bezug auf die Gesamtmenge der nach dem Verfahren der radikalischen wässrigen Polymerisation zu polymerisierenden Monomeren normalerweise einen Anteil von mehr als 80 Gew. % auf sich vereinen.

In aller Regel weisen diese Monomeren in Wasser bei Normalbedingungen (25°C, 1 atm) lediglich eine mäßige bis geringe Löslichkeit auf.

Selbstverständlich können weitere Comonomere, welche die Eigenschaften in gezielter Weise modifizieren, zugesetzt werden. Solche Monomere werden im Normalfall lediglich als modifizierende Monomere in Mengen, bezogen auf die Gesamtmenge der zu polymerisierenden Monomeren, von kleiner gleich 20 Gew. %, in der Regel 0,5 bis 20, vorzugsweise 1 bis 10 Gew. % einpolymerisiert.

Dabei kann es sich um Monomere handeln, die üblicherweise die innere Festigkeit von Verfilmungen der wässrigen Vinylester-Copolymerdispersionen erhöhen. Diese weisen normalerweise wenigstens eine Epoxy-, Hydroxy-, N-Methylol- oder Carbonylgruppe, oder wenigstens zwei nicht konjugierte ethylenisch ungesättigte Doppelbindungen auf.

Beispiele hierfür sind N-Alkylolamide von drei bis zehn Kohlenstoffatome aufweisenden α, β-monoethylenisch ungesättigten Carbonsäuren, unter denen das N-Methylolacrylamid und das N-Methylolmethacrylamid ganz besonders bevorzugt sind sowie deren Ester mit ein bis vier Kohlenstoffatomen aufweisenden Alkanolen. Daneben kommen auch zwei Vinylreste aufweisende Monomere, zwei Vinylidenreste aufweisende Monomere sowie zwei Alkenylreste aufweisende Monomere in Betracht.

Weitere Beispiele hierfür sind Di-Ester zweiwertiger Alkohole mit a,β-monoethylenisch ungesättigten Monocarbonsäuren, unter denen die Acryl und Methacrylsäure bevorzugt sind.

Die erfindungsgemäß eingesetzte Vinylestercopolymer-Dispersion beinhaltet eine sehr breit verteilte oder mehrmodale Polymerdispersion, die durch Einsatz von Schutzkolloiden in Kombination mit Emulgatoren bei der Emulsionspolymerisation hergestellt worden ist.

Eine erfindungsgemäß besonders bevorzugt eingesetzte wässrige Vinylestercopolymer-Dispersion mit einer sehr breiten Teilchengrößenverteilung leitet sich von mindestens einem Vinylestercopolymer ab, das durch Emulsionspolymerisation mindestens eines Vinylesters einer aliphatischen Carbonsäure in Gegenwart mindestens eines Polyvinylalkohols, vorzugsweise einer Mischung von Polyvinylalkoholen, und nichtionischen Emulgatoren, erhalten wurde.

Besonders bevorzugt eingesetzte Vinylestercopolymere leiten sich ab von
A1) Vinylestern von aliphatischen, gesättigten Carbonsäuren mit einer Kettenlänge von C₁-C₄,
A2) alpha-Olefinen mit 2 bis 8 C-Atomen, und/oder
A3) Vinylestern von aliphatischen, gesättigten Carbonsäuren mit einer Kettenlänge von C₅-C₁₈, insbesondere Vinylestern von α-verzweigten Carbonsäuren mit 5 bis 11 Kohlenstoffatomen im Säurerest (^{®}Versaticsäuren),
A4) gegebenenfalls Estern von ethylenisch ungesättigten Mono- oder Dicarbonsäuren, insbesondere von Acrylsäure und/oder von Methacrylsäure und/oder von Maleinsäure, mit einwertigen gesättigten Alkholen, insbesondere Butylacrylat (BuA) und/oder 2 Ethylhexylacrylat (2-EHA) und/oder von Dibutylmaleinat und/oder Dioctylmaleinat, sowie
A5) gegebenenfalls weiteren Comonomeren, welche nicht in eine der Gruppen A1 bis A4) fallen, wobei die Summe der Monomeren der Typen A1, A2 und/oder A3 und/oder gegebenenfalls A4 und/oder gegebenenfalls A5 100 Gew.-% ergeben.

Besonders bevorzugt eingesetzte Vinylester-Copolymere leiten sich ab von Monomeren der Typen A1, A2 und/oder gegebenenfalls A4) oder A1, A3 und/oder gegebenenfalls A4) oder bevorzugt von Monomeren der Typen A1, A2, A3 und/oder gegebenenfalls A4).

Bei den Vinylestern A1 von aliphatischen gesättigten Carbonsäuren der Kettenlänge C₁-C₄ handelt es sich um Vinylester von geradkettigen oder verzweigten aliphatischen Carbonsäuren, beispielsweise um Vinylformiat, Vinylacetat, Vinylpropionat, Vinylbutyrat oder Vinylisobutyrat. Vinylacetat ist bevorzugt. Die Vinylester A1 können im Polyvinylester auch in Kombination von zwei oder mehreren davon nebeneinander vorliegen.

Der Anteil der Monomeren A1, gegebenenfalls in Kombination mit weiteren Comonomeren aus dieser Gruppe, beträgt 40 bis 95 Gew.-%, vorzugsweise 50 bis 80 Gew. %, bezogen auf die Gesamtmenge der eingesetzten Monomeren.

Bei den alpha-Olefinen mit 2 bis 8 C-Atomen A2 handelt es sich um verzweigte oder um geradkettige alpha-Olefine, beispielsweise um Prop-1-en, But-1-en, Pent-1-en, Hex-1-en, Hept-1-en, Oct-1-en und insbesondere um Ethylen,

Der Anteil der Monomeren A2, gegebenenfalls in Kombination mit weiteren Comonomeren aus dieser Gruppe, beträgt 0 bis 45 Gew.-%, bevorzugt 5 bis 45 Gew.-%, besonders bevorzugt 8 bis 30 Gew. %, ganz besonders bevorzugt 12 bis 28 Gew.-%, bezogen auf die Gesamtmenge der eingesetzten Monomeren.

Bei den Vinylestern A3 von aliphatischen gesättigten Carbonsäuren der Kettenlänge C₅-C₁₈ handelt es um Vinylester von geradkettigen oder vorzugsweise von verzweigten aliphatischen Carbonsäuren, beispielsweise um Vinylester von α-verzweigten Carbonsäuren mit 5 bis 11 Kohlenstoffatomen im Säurerest (^{®}Versaticsäuren), die Vinylester der Pivalin-, 2-Ethylhexan-, Laurin-, Palmitin-, Myristin- und Stearinsäure. Vinylester von Versaticsäuren, insbesondere VeoVa® 9, VeoVa® . 10 und VeoVa® 11, sind bevorzugt. Die Vinylester A3 können im Polyvinylester auch in Kombination von zwei oder mehreren davon nebeneinander vorliegen.

Der Anteil der Monomeren A3, gegebenenfalls in Kombination mit weiteren Comonomeren aus dieser Gruppe, beträgt 0 bis 60 Gew.-%, bevorzugt 0 bis 40 Gew.-%, besonders bevorzugt 0 bis 30 Gew. %, ganz besonders bevorzugt 0 bis 25 Gew.-%, bezogen auf die Gesamtmenge der eingesetzten Monomeren.

Geeignete Comonomere der Gruppe A4, die im Copolymerisat Verwendung finden können, sind Comonomere, mit denen die Klebeeigenschaften gezielt eingestellt werden können. Hierzu zählen in erster Linie Ester ethylenisch ungesättigter Mono- oder Dicarbonsäuren mit einwertigen gesättigten Alkoholen, insbesondere Ester der Acryl- oder Methyacrylsäure oder der Maleinsäure mit aliphatischen C₁-C₈-Monoalkoholen, insbesondere (Meth)acrylsäureester oder Maleinsäurediester einwertiger aliphatischer gesättigter Alkohole der Kettenlänge C₄-C₈. Beispiele für besonders bevorzugte Monomere dieses Typs sind Butylacrylat, 2-Ethylhexylacrylat, Dibutylmaleinat oder Dioctylmaleinat.

Der Anteil der Monomeren A4, gegebenenfalls in Kombination mit weiteren Comonomeren aus dieser Gruppe, beträgt 0 bis 45 Gew.-%, bevorzugt 0 bis 40 Gew.-%, besonders bevorzugt 0 bis 30 Gew. %, ganz besonders bevorzugt 0 bis 20 Gew.-%, bezogen auf die Gesamtmenge der eingesetzten Monomeren.

Geeignete Comonomere der Gruppe A5 besitzen vorzugsweise mindestens eine stabilisierende nichtionische oder ionische Gruppe, vorzugsweise eine Säuregruppe oder eine OH-Gruppe im Molekül, die das Emulsionspolymer zusätzlich über polymergebundene funktionelle Gruppen und/oder Ladungen stabilisieren.

Als Comonomere A5 mit stabilisierenden nichtionischen Gruppen eignen sich insbesondere Ester von ethylenisch ungesättigten aliphatischen Mono- und/oder Dicarbonsäuren mit Polyalkylenglykolen, vorzugsweise mit Polyethylenglykolen und/oder Polypropylenglykolen, oder Ester von ethylenisch ungesättigten Carbonsäuren mit Aminoalkoholen, wie (Meth)acrylsäureester von Aminoalkoholen, beispielsweise von Diethylaminoethanol, und/oder (Meth)acryl-säureester mit Dimethylaminoethanol, sowie (Meth)acrylsäureester mit zweiwertigen aliphatischen Alkoholen der Kettenlänge C₂-C₁₈, bei denen nur eine Alkoholgruppe verestert ist.

Ferner eignen sich Amide von ethylenisch ungesättigten Carbonsäuren, wie Amide der Acryl- und Methacrylsäure und N-Methylolamide der Acryl- und Methacrylsäure sowie deren Ether. Eine weitere Gruppe dieser Monomeren sind N-Vinylamide einschließlich der N-Vinyllactame, beispielsweise Vinylpyrrolidon oder N-Vinyl-N-methylacetamid.

Als Comonomere A5 mit stabilisierenden ionischen Gruppen eignen sich ethylenisch ungesättigte Carbonsäuren oder Sulfonsäuren, die ein- oder zwei Carboxylgruppen oder eine Sulfonsäuregruppe aufweisen. Anstelle der freien Säuren können auch deren Salze, vorzugsweise Alkali- oder Ammoniumsalze eingesetzt werden.

Beispiele dafür sind Acrylsäure, Methacrylsäure, Crotonsäure, Maleinsäure, Fumarsäure, Itaconsäure, Vinylsulfonsäure, Styrolsulfonsäure, Halbester der Malein- bzw. Fumarsäure und der Itaconsäure mit einwertigen aliphatischen gesättigten Alkoholen der Kettenlänge C₁-C₁₈ sowie deren Alkali- und Ammoniumsalze oder (Meth)acrylsäureester von Sulfoalkanolen, beispielsweise Natrium-2-sulfoethylmethacrylat.

Weitere Comonomere A5, mit denen die Klebeeigenschaften gezielt eingestellt werden können, sind ethylenisch ungesättigte Silane. Dabei handelt es sich typischerweise um Monomere der allgemeinen Formel RSi(CH₃)₀₋₂(OR¹)₃₋₁, wobei R die Bedeutung CH₂=CR²-(CH₂)₀₋₁ oder CH₂=CR²CO₂-(CH₂)₁₋₃ hat, R¹ ein unverzweigter oder verzweigter, gegebenenfalls substituierter Alkylrest mit 1 bis 12 C-Atomen ist, der gegebenenfalls durch eine Ethergruppe unterbrochen sein kann, und R² für H oder CH₃ steht.

Zu weiteren Comonomeren A5 die im Copolymerisat Verwendung finden können, sind beliebige Comonomere einsetzbar, die nicht den Gruppen A1, A2, A3 oder A4 angehören. Beispiele dafür sind Ester aliphatischer Carbonsäuren der Kettenlänge C₃-C₁₂ mit ungesättigten Alkoholen der Kettenlänge C₃-C₁₈, Vinylchlorid, Vinylidenchlorid, Acrylnitril und Methacrylnitril, Butadien, Isopren, C₉-C₁₆ alpha-Olefine, 2-Chlorbutadien, 2,3-Dichlorbutadien, Tetrafluorethylen, Styrol, Vinylether von einwertigen aliphatischen gesättigten Alkoholen der Kettenlänge C₁-C₁₈, Divinyl- und Diallylester von gesättigten und ungesättigten aliphatischen Dicarbonsäuren der Kettenlänge C₃-C₁₈, Vinyl- und Allylester der Acrylsäure und Crotonsäure, Triallylcyanurat und ethylenisch ungesättigte Epoxidverbindungen, wie Glycidylmethacrylat oder Glycidylacrylat.

Bevorzugt sind als weitere Comonomere A5 C₁₄-C₁₆ alpha-Olefine oder Butadien oder ethylenisch ungesättigte Epoxidverbindungen.

Die Menge der gegebenenfalls vorhandenen weiteren Comonomeren A5, gegebenenfalls in Kombination mit weiteren Comonomeren aus dieser Monomergruppe, beträgt typischerweise bis zu 10 Gew.-% , vorzugsweise bis zu 8 Gew.-%, bezogen auf die gesamte Copolymerzusammensetzung A).

Die Comonomeren A5 können im Polyvinylester auch in Kombination von zwei oder mehreren davon nebeneinander vorliegen.

Bevorzugt eingesetzte Dispersionen enthalten Polyvinylacetat-Ethylen-Copolymere, die insbesondere zwischen 12 und bis zu 40 Gewichtsteile Ethylen enthalten.

Eine andere bevorzugte Variante der erfindungsgemäß eingesetzten Dispersionen enthält Polyvinylacetat-Ethylen-Copolymere, die zusätzlich 0,5 bis 40 Gewichtsteile von Estern der Acrylsäure und/oder von Estern der Methacrylsäure und/oder von Diestern der Maleinsäure mit einwertigen gesättigten Alkholen, insbesondere Butylacrylat (BuA) und/oder 2 Ethylhexylacrylat (2-EHA) und/oder Dibutylmaleinat und/oder Dioctylmaleinat, einpolymerisiert erhalten.

Der Feststoffanteil der erfindungsgemäß eingesetzten wässrigen Vinylestercopolymer-Dispersionen mit breiter Teilchengrößenverteilung beträgt typischerweise 40 bis 70 Gew.-%, vorzugsweise 45 bis 60 Gew. %, bezogen auf den Gesamtfeststoffgehalt, besonders bevorzugt zwischen 50 und 55 %.

Die erfindungsgemäß eingesetzten Vinylestercopolymer-Dispersionen enthalten ein Stabilisatorgemisch aus ausgewählten Polyvinylalkoholen und/oder deren Modifikationen nach Anspruch 1, in Kombination mit mindestens einem nichtionischen Emulgator.

Bei den Schutzkolloiden handelt es sich um wasserlösliche oder wasserdispergierbare Polymere, die während der Emulsionspolymerisation anwesend sind und die entstehende Dispersion stabilisieren. Emulgatoren sind niedermolekulare Verbindungen, welche die Emulsion sowie das entstandene Produkt stabilisieren.

Beispiele für gegebenenfalls anwesende Schutzkolloide sind wasserlösliche oder wasserdispergierbare polymere modifizierte Naturstoffe, wie Celluloseether, z.B. Methyl-, Ethyl-, Hydroxyethyl- oder Carboxymethylcellulose. Als Schutzkolloide werden wasserlösliche oder wasserdispergierbare Polyvinylalkohole oder deren Copolymere (mit oder ohne Restacetylgehalt), teilweise veresterter oder acetalisierter oder mit gesättigten Resten veretherter Polyvinylalkohol eingesetzt.

Die Schutzkolloide werden in Kombination eingesetzt. Sie unterscheiden sich jeweils in ihren Molekulargewichten oder sie unterscheiden sich in ihren Molekulargewichten und ihrer chemischen Zusammensetzung wie zum Beispiel dem Hydrolysegrad.

Anstelle des Molekulargewichts wird vorzugsweise die Viskosität einer 4 %-igen wässrigen Lösung bei 20°C (gemessen mit dem Höppler Viskosimeter) angegeben.

Polyvinylalkohol wird generell durch Verseifen von Polyvinylacetat hergestellt.

Unter hochmolekularem Polyvinylalkohol ist im Rahmen dieser Beschreibung ein Polyvinylalkohol zu verstehen, dessen 4 %-ige wässrige Lösung bei 20°C (gemessen mit dem Höppler Viskosimeter) eine Viskosität von mindestens 18 mPa*s aufweist.

Ein zur Herstellung der Vinylestercopolymer-Dispersionen eingesetzter Polyvinylalkohol besitzt einen Verseifungsgrad von 70 bis 100 mol %, bevorzugt 80 bis 99 mol %, besonders bevorzugt 87 bis 99 mol % und dessen wässrige Lösung besitzt eine Viskosität bei 20°C von 18 bis 60 mPa*s, 18-50 mPa*s insbesondere 18 - 40 mPa*s. Zusätzlich zu diesen hochmolekularen Polyvinylalkoholen werden Gemische mit Polyvinylalkoholen geringeren Molekulargewichts eingesetzt. Dabei handelt es sich um Polyvinylalkohole mit einem Verseifungsgrad von 70 bis 100 mol %, bevorzugt 80 bis 99 mol %, besonders bevorzugt 87 bis 99 mol %, deren wässrige Lösung eine Viskosität bei 20°C von 2 bis 18 mPa*s, vorzugsweise 3-18 mPa*s insbesondere 4 - 18 mPa*s aufweist.

Diese und folgende Viskositätsangaben beziehen sich jeweils auf Messungen mit dem Höppler-Viskosimeter.

Weitere geeignete und besonders bevorzugte Polyvinylalkohole können in irgendeiner Art hydrophob bzw. hydrophil modifiziert worden sein.

Beispiele für hydrophob modifizierte Polyvinylalkohole, die in ihrer Hauptkette nicht wasserlösliche Monomerbausteine enthalten, sind Ethylenhaltige Polyvinylalkohole vom Typ Exceval^{®} der Firma KSE. Es können aber auch andere Comonomere im Polyvinylalkohol enthalten sein wie z. B. Versaticsäurevinylester, AMPS, Vinylsulfonat oder carbonsäurehaltige Alkylenverbindungen wie beispielsweise Acrylsäure, Methacrylsäure oder Itaconsäure. Die Comonomere können blockartig und/oder statistisch im Polyvinylalkohol verteilt sein und ermöglicht unter anderem die Steuerung der Stabilisierung.

Eine andere bevorzugte Möglichkeit ist die Modifizierung durch beliebige Seitenkettenreaktionen am Polyvinylalkohol, wobei die Modifikation an den Alkoholgruppen bevorzugt ist. Beispielsweise kann eine Teilacetalisierung der Alkoholgruppen des Polyvinylalkohols erfolgen, wobei die Polyvinylalkohole mit beliebigen Resten ausgestattet werden können, die entweder hydrophob oder hydrophil sein können, insbesondere mit C₁-C₁₂-Alkylresten, ganz besonders bevorzugt mit Butylresten modifizierte Polyvinylalkohole, wie in der DE-A-196 50 831 beschrieben.

Es können aber auch Polyvinylalkohole mit anderen Modifikationen eingesetzt werden.

Es werden Mischungen von verschiedenen Schutzkolloiden verwendet.

Die Gesamtmenge der eingesetzten Polyvinylalkohole und/oder deren modifizierten Derivaten, beträgt typischerweise 2 bis 12 Gew. %, vorzugsweise, 3 bis 8 Gew. %, bezogen auf das Gesamtgewicht aller zur Herstellung der Vinylestercopolymer-Dispersion verwendeten Monomeren.

Die erfindungsgemäß eingesetzte Vinylester-Copolymerdispersion enthält neben den Schutzkolloiden zusätzlich zwingendermaßen Emulgatoren. Dabei handelt es sich um nichtionische Emulgatoren E1 und gegebenenfalls um anionische Emulgatoren E2.

Beispiele für nichtionische Emulgatoren E1 sind Acyl-, Alkyl-, Oleyl- und Alkylaryloxethylate. Diese Produkte sind beispielsweise im Handel unter der Bezeichnung Genapol^{®}, Lutensol^{®} oder Emulan^{®} erhältlich. Hierunter fallen beispielsweise ethoxilierte Mono-, Di- und Tri-Alkylphenole (EO-Grad: 3 bis 50, Alkylsubstituentenrest: C₄ bis C₁₂) sowie ethoxilierte Fettalkohole (EO-Grad: 3 bis 80; Alkylrest: C₈ bis C₃₆), speziell C₁₂-C₁₄-Fettalkohol(3-40)ethoxilate, C₁₃C₁₅-Oxoalkohol(3-40)ethoxilate, C₁₆C₁₈-Fettalkohol(11-80)ethoxilate, C₁₀-Oxoalkohol(3-40)ethoxilate, C₁₃-Oxoalkohol(3-40)ethoxilate, Polyoxyethylensorbitanmonooleat mit 20 Ethylenoxidgruppen, Copolymere aus Ethylenoxyd und Propylenoxyd mit einem Mindestgehalt von 10 Gew.-% Ethylenoxid, die Polyethylenoxid(4-40)-Ether von Oleylalkohol sowie die Polyethenoxid(4-40)-Ether von Nonylphenol. Besonders geeignet sind die Polyethylenoxid(4-40)-Ether von Fettalkoholen, insbesondere von Oleylalkohol, Stearylalkohol oder C₁₁ Alkylalkoholen.

An nichtionischen Emulgatoren E1 werden typischerweise 0,05 bis 5,0 Gew.%, vorzugsweise 0,05 bis 4,0 Gew.%, besonders bevorzugt 0,05 bis 1,5 Gew. % bezogen auf das Polymere, verwendet. Es lassen sich auch Gemische von nichtionischen Emulgatoren einsetzen.

Beispiele für anionische Emulgatoren E2 sind Natrium-, Kalium- und Ammoniumsalze von geradkettigen aliphatischen Carbonsäuren der Kettenlänge C₁₂-C₂₀, Natriumhydroxyoctadecansulfonat, Natrium-, Kalium- und Ammoniumsalze von Hydroxyfettsäuren der Kettenlänge C₁₂-C₂₀ und deren Sulfonierungs- bzw. Sulfatierungs- und/oder Acetylierungsprodukte, Alkylsulfate, auch als Triethanolaminsalze, Alkyl-(C₁₀-C₂₀)-sulfonate, Alkyl(C₁₀-C₂₀)-arylsulfonate Dimethyldialkyl(C₈-C₁₈)-ammoniumchlorid, und ihre Sulfierungs-produkte, Ligninsulfonsäure sowie deren Calcium-, Magnesium-, Natrium- und Ammoniumsalze, Harzsäuren, hydrierte und dehydrierte Harzsäuren sowie deren Alkalisalze, dodecyliertes Diphenyletherdisulfonsaures Natrium, Natriumlaurylsulfat, ethoxyliertes Natriumlaurylethersulfat (EO-Grad 3) oder ein Salz eines Bisesters, vorzugsweise eines Bis-C₄-C₁₈-Alkylesters, einer sulfonierten Dicarbonsäure mit 4 bis 8 Kohlenstoffatomen oder ein Gemisch dieser Salze, vorzugsweise sulfonierte Salze von Estern der Bernsteinsäure, besonders bevorzugt um Salze, wie Alkalimetallsalze, von Bis-C₄-C₁₈-Alkylestern sulfonierter Bernsteinsäure.

An anionischen Emulgatoren E2 werden typischerweise 0,05 bis 5,0 Gew.%, vorzugsweise 0,05 bis 2,0 Gew.%, besonders bevorzugt 0,05 bis 1,5 Gew. %, bezogen auf das Polymere, verwendet. Es lassen sich auch Gemische von anionischen Emulgatoren einsetzen.

Es lassen sich auch Gemische von nichtionischen und anionischen Emulgatoren einsetzen. Der Gewichtsanteil von Emulgatoren E1 zu E2 kann in weiten Bereichen schwanken, beispielsweise zwischen 50:1 und 1:1.

Zusätzlich zu den während der Emulsionspolymerisation eingesetzten Schutzkolloiden und Emulgatoren können die Dispersionen noch nachträglich zugesetzte wasserlösliche oder wasserdispergierbare Polymere und/oder nachträglich zugesetzte Emulgatoren enthalten.

Typischerweise beträgt der Gesamtanteil an Emulgatoren, bezogen auf das Polymere, 0,05 bis 5 Gew.%, vorzugsweise 0,05 bis 4,0 Gew.%, besonders bevorzugt 0,05 bis 1,5 Gew. %.

Bevorzugt werden nur nichtionische Emulgatoren eingesetzt.

Besonders bevorzugt eingesetzte Vinylestercopolymer-Dispersionen enthalten Polyvinylalkohol in einer Menge von 3 bis 10 Gew. %, bezogen auf die eingesetzten Monomeren, und enthalten Emulgator in einer Menge von 0,05 - 1,5 Gewichtsteilen.

Gegebenenfalls enthalten die erfindungsgemäß eingesetzten wässrigen Vinylestercopolymer-Dispersionen noch weitere für die Formulierung von Dispersionsklebern an sich übliche Zusätze.

Dazu zählen beispielsweise Filmbildehilfsmittel, wie Testbenzin, Texanol^{®}, TxiB^{®}, Butylglykol, Butyldiglykol, Butyldipropylenglykol und Butyltripropylenglykol; Weichmacher, wie Dimethylphthalat, Disobutylphthalat, Adipinsäurediisobutylester, Coasol B^{®}, Plastilit 3060^{®} und Triazetin^{®}; Netzmittel, wie AMP 90^{®}, TegoWet.280^{®}, Fluowet PE^{®}; Verdicker, wie Polyacrylate oder Polyurethane, wie Borchigel L75^{®} und Tafigel PUR 60^{®}; Entschäumer, z.B. Mineralöl- oder Silikonentschäumer; UV-Schutzmittel, wie Tinuvin 1130^{®}, nachträglich zugesetzte stabilisierenden Polymere, wie Polyvinylalkohol oder Celluloseether, und andere Additive und Hilfsmittel, wie sie zur Formulierung von Klebstoffen üblich sind verwendet werden.

Der Anteil dieser Zusätze im erfindungsgemäß eingesetzten Dispersionsklebstoff kann bis zu 25 Gew.-%, vorzugsweise 2 bis 15 Gew. %, und insbesondere 5 bis 10 Gew. %, bezogen auf die Dispersion, betragen.

Die erfindungsgemäß eingesetzten wässrigen Vinylestercopolymer-Dispersionen werden vorteilhafterweise durch Emulsionspolymerisation mindestens eines Vinylesters einer aliphatischen Carbonsäure hergestellt, wobei:
a) 2 bis 10 Gew. %, bezogen auf das Gesamtgewicht aller zur Herstellung der Vinylester-Copolymerdispersion verwendeten Monomeren, mindestens eines Gemisches aus Polyvinylalkoholen nach Anspruch 1 vorgelegt werden,
b) 0,05 bis 5 Gew. %, bezogen auf das Gesamtgewicht aller zur Herstellung der Vinylester-Copolymerdispersion verwendeten Monomeren, mindestens eines nichtionischen Emulgators und/oder ionischen Emulgators, vorzugsweise eines Alkyl- und/oder Arylethoxylats vorgelegt werden,
c) 0 bis 60 Gew. %, bezogen auf das Gesamtgewicht aller zur Herstellung der Vinylester-Copolymerdispersion verwendeten Monomeren, des oder der Monomeren vorgelegt werden,
d) mindestens ein Vinylester einer Carbonsäure, vorzugsweise in Kombination mit Ethylen und mindestens ein Initiator der radikalischen Emulsionspolymerisation zu dem Gemisch enthaltend Komponenten a), b) und gegebenenfalls c) zugegeben werden, und wobei
e) Art und Menge der Monomeren so gewählt werden, dass eine Vinylestercopolymer-Dispersion mit einer Glasübergangstemperatur zwischen -30 und +15 °C entsteht.

Infolge der Durchführung der Polymerisation als Dosierverfahren, wobei in der Vorlage gegebenenfalls bis zu 60 % an Monomeren sowie eine Kombination aus den Schutzkolloiden mit mindestens einem Emulgator vorliegen, entstehen Vinylestercopolymer-Dispersionen mit der oben beschrieben breiten Teilchengrößenverteilung, vorzugsweise mit einem Gewichtsmittel der Teilchengrößenverteilung d_{w} der Dispersion von 0,5 bis 6,0 µm, insbesondere 0,7 bis 5,0 µm, und der Quotient d_{w}/dₙ beträgt vorzugsweise 2,5 bis 20,0, insbesondere 3,0 bis 15,0.

Im Verfahren werden die Monomeren so ausgewählt, dass Copolymere entstehen, deren Glasübergangstemperatur zwischen - 30 bis + 15 °C, vorzugsweise zwischen -20 bis +10 °C und ganz besonders bevorzugt zwischen -20 und +5°C liegt. Dem Fachmann sind die Auswahlkriterien dafür bekannt.

Die Herstellung der Dispersionen kann über ein Verfahren der Emulsionspolymerisation stattfinden, bei der das Monomer kontinuierlich, diskontinuierlich dosiert wird oder bis zu 60 Gew. % in der Vorlage vorhanden ist. Bevorzugt ist eine kontinuierliche Dosierung.

Die Schutzkolloide und Emulgatoren sind bereits durch Schritte a) und b) in der Vorlage enthalten und können zusätzlich während der Polymerisation zugegeben werden. Weitere Mengen davon können darüber hinaus auch noch nach der Polymerisation hinzugefügt werden. Bevorzugt wird der gesamte Stabilisator vorgelegt, es kann aber auch ein Teil des Stabilisators zu Beginn vorgelegt und der Rest wird nach dem Starten der Polymerisation in ein oder mehreren Schritten oder kontinuierlich zugegeben. Die Zugabe kann getrennt erfolgen oder zusammen mit anderen Komponenten, wie Monomeren und/oder Initiatoren, oder auch als Monomeremulsion.

Die zur Herstellung der bevorzugt erfindungsgemäß eingesetzten Polymerdispersion verwendeten Gemische von Polyvinylalkoholen und/oder deren modifizierten Derivaten, werden vorzugsweise zu Beginn der Polymerisation gelöst (üblicherweise in Wasser) und zwei bis drei Stunden bei mindestens 85 °C, vorzugsweise bei mindestens 90 °C und vor der Polymerisation vorgelegt.

Selbstverständlich können neben den Vinylestern auch Comonomere zum Einsatz kommen. Beispiele dafür sind weiter oben aufgeführt.

Die Herstellung wässriger Polymerdispersionen ist vielfach vorbeschrieben und dem Fachmann daher bekannt [vgl. z.B. Encyclopedia of Polymer Science and Engineering, Vol. 8, S. 659 ff (1987)].

ie erfolgt vorzugsweise durch Emulsionspolymerisation von wenigstens einem Vinylestermonomeren in Gegenwart eines bevorzugt wasserlöslichen Polymerisationsinitiators sowie in Gegenwart von Stabilisatoren bzw. gegebenenfalls zusätzlich vorhandenen Emulgatoren und gegebenenfalls üblichen weiteren Zusatzstoffen. Sie kann aber auch in anderen Heterophasensystemen durchgeführt werden, wobei bevorzugt die oben beschriebenen Maßnahmen a) bis f) ergriffen werden.

In der Regel erfolgt der Zusatz der Monomeren durch kontinuierlichen Zulauf; es kann aber auch bis zu 60 Gew. % der Monomeren vorgelegt werden.

Die Polymerisation kann auch in an sich bekannter Weise in mehreren Stufen mit unterschiedlichen Monomerkombinationen erfolgen, wobei Polymerdispersionen mit Teilchen heterogener Morphologie entstehen.

Als Initiatoren für die radikalische Polymerisation zum Starten und Weiterführen der Polymerisation während der Herstellung der Dispersionen kommen alle bekannten Initiatoren in Betracht, die in der Lage sind, eine radikalische, wässrige Polymerisation in Heterophasensystemen zu starten.

Es kann sich dabei um Peroxide, wie z.B. Alkatimetall- und/oder Ammoniumperoxodisulfate oder um Azoverbindungen, insbesondere um wasserlösliche Azoverbindungen, handeln.

Als Polymerisationsinitiatoren können auch sogenannte Redoxinitiatoren verwendet werden. Beispiele dafür sind tert.-Butylhydroperoxid und/oder Wasserstoffperoxid in Kombination mit Reduktionsmitteln, wie mit Schwefelverbindungen, z.B. dem Natriumsalz der Hydroxymethansulfinsäure, Brüggolit FF6 und FF7, Rongalit C, Natriumsulfit, Natriumdisulfit, Natriumthiosulfat und Acetonbisulfitaddukt, oder mit Ascorbinsäure oder mit reduzierenden Zuckern.

Die Menge der im Verfahren eingesetzten Initiatoren oder Kombinationen von Initiatoren bewegt sich im Rahmen der für wässrige Polymerisationen in Heterophasensystemen üblich ist. In der Regel wird die Menge des eingesetzten Initiators 5 Gew. %, bezogen auf die Gesamtmenge der zu polymerisierenden Monomeren, nicht überschreiten.

Vorzugsweise beträgt die Menge der eingesetzten Initiatoren, bezogen auf die Gesamtmenge der zu polymerisierenden Monomeren, 0,05 bis 2,0 Gew. %.

Dabei kann die Gesamtmenge an Initiator bereits zu Beginn der Polymerisation vorgelegt werden oder bevorzugt wird ein Teil des Initiators zu Beginn vorgelegt und der.Rest wird nach dem Starten der Polymerisation in ein oder mehreren Schritten oder kontinuierlich zugegeben. Die Zugabe kann getrennt erfolgen oder zusammen mit anderen Komponenten, wie Emulgatoren.

Das Molekulargewicht der Polymerisate der wässrigen Polymerdispersionen kann durch Zugabe geringer Mengen einer oder mehrerer das Molekulargewicht regelnder Substanzen eingestellt werden. Diese sogenannten Regler werden im allgemeinen in einer Menge von bis zu 2 Gew. %, bezogen auf die zu polymerisierenden Monomeren, eingesetzt. Als Regler können alle dem Fachmann bekannten Substanzen eingesetzt werden. Bevorzugt sind z.B. organische Thioverbindungen, Silane, Allylalkohole und Aldehyde.

Darüber hinaus kann die wässrige Polymerdispersion noch eine Reihe weiterer Substanzen, wie zum Beispiel Weichmacher, Konservierungsmittel, Mittel zum Einstellen des pH-Wertes und/oder Entschäumer enthalten.

Die Polymerisationstemperatur beträgt im allgemeinen 20 bis 150 °C und bevorzugt 50 bis 100°C.

Die Polymerisation findet gegebenenfalls unter Druck statt, bevorzugt 10-150 bar, besonders bevorzugt 30 bis 95 bar.

Im Anschluss an die eigentliche Polymerisationsreaktion kann es wünschenswert und/oder erforderlich sein, die erhaltene wässrige Polymerdispersion weitgehend frei von Geruchsträgern, wie z.B. Restmonomeren und anderen flüchtigen, organischen Bestandteilen zu gestalten. Dies kann in an sich bekannter Weise beispielsweise physikalisch durch destillative Entfernung (insbesondere über Wasserdampfdestillation) oder durch Abstreifen mit einem inerten Gas erreicht werden. Ferner kann die Absenkung der Restmonomeren auch chemisch durch radikalische Nachpolymerisation, insbesondere durch Einwirkung von Redoxinitiatorsystemen, wie sie z.B. in der DE-A-4,435,423 beschrieben sind, erfolgen. Bevorzugt ist eine Nachpolymerisation mit einem Redoxinitiatorsystem aus mindestens einem organischen Peroxid sowie einem organischen und/oder anorganischen Sulfit und/oder Sulfinsäurederivaten.

Besonders bevorzugt ist eine Kombination aus physikalischen und chemischen Methoden, wobei nach einer Absenkung des Restmonomer-Gehaltes durch chemische Nachpolymerisation die weitere Absenkung des Restmonomergehaltes mittels physikalischer Methoden auf vorzugsweise <2000 ppm, besonders bevorzugt <1000 ppm, insbesondere <100 ppm erfolgt.

Die Polymerisation wird üblicherweise bei einem pH-Wert im Bereich von kleiner/gleich 9 durchgeführt. Zur Einstellung des pH-Wertes der Polymerdispersion können prinzipiell Puffersysteme, wie beispielsweise Natriumacetat oder Phosphatpuffersysteme, verwendet werden.

Bevorzugt ist ein pH-Bereich von 2 bis 9 günstig, bevorzugt ist ein pH-Wert im Bereich zwischen 3 und 8.

Der Feststoffgehalt der erfindungsgemäßen Vinylestercopolymer-Dispersionen liegt bei mindestens 40 Gew. %, vorzugsweise zwischen 45 und 60 Gew. %, und besonders bevorzugt zwischen 50 und 55 %. Die Gewichtsangaben beziehen sich dabei auf die Gesamtmasse der Dispersion.

Der Auftrag bei der Düsenapplikation auf Substrate erfolgt punktuell oder strichförmig.

Bevorzugt werden die Dispersionsklebstoffe zur Verklebung von Papier oder beschichtetem Papier in der Fließbandfertigung von Faltschachteln, Briefumschlägen, Prospekten und Zigaretten eingesetzt, wobei insbesondere Papier-Papier-Verklebungen (beschichtet und unbeschichtet) oder Papier-Kunststofffolien-Verklebungen hergestellt werden.

Eine Besonderheit dieser Erfindung ist auch, dass die Dispersionen so hergestellt werden können, dass sie auch schwierig zu verklebende Substrate, wie UV-Lack beschichtete Papiere, verkleben kann, ohne dass der Wärmestand auf ein kritisches Niveau (< 60 °C) absinkt.

Diese Verwendungen sind ebenfalls Gegenstand der vorliegenden Erfindung.

Die nachfolgenden Beispiele erläutern die Erfindung ohne diese zu begrenzen.

### Messmethoden

### Messung der Partikelgrößenverteilung

Die Messung der Partikelgrößenverteilung wurde mit Hilfe des Laserbeugungsgerätes Mastersizer Micro Plus der Firma Malvern durchgeführt. Zur Auswertung der Streudaten wurde die von Malvern zur Verfügung gestellte volumengemittelte "polydisperse Mie"-Auswertung verwendet.

### Glasübergangstemperatur

Die Messung der Glasübergangstemperatur wurde mit einem Mettler DSC 820 bei 20 K/min durchgeführt. Ausgewertet wurde die zweite Aufheizkurve.

### Beispiel 1

In einer 60 I Druckapperatur mit Rührer, Mantelheizung und Dosierpumpen wurde eine wäßrige Lösung bestehend aus folgenden Bestandteilen vorgelegt:

| | |
|---|---|
| 13109 g | E-Wasser (entionisiertes Wasser) |
| 5898 g | Celvol^{®} 508 (15 %ig in E-Wasser, Polyvinylalkohol der Celanese) |
| 2524 g | Celvol^{®} 523 (15 %ig in E-Wasser, Polyvinylalkohol der Celanese) |
| 17 g | Natriumacetat |
| 112 g | Genapol^{®} T 250 (nichtionischer Emulgator auf Basis eines Ethoxylats von Clariant) |
| 17,6 g | Natriumdisulfit |
| 0,06 g | Mohrsches Salz |

Die Polyvinylalkohole wurden zuvor je in einer 15 %igen Lösung bei 90 °C 2 Stunden Die wäßrige Lösung wurde mit ca. 5,6 g Essigsäure auf einen pH von 4,8 - 5,2 eingestellt. Die Apparatur wurde von Luftsauerstoff befreit. 8 % der Vinylacetatmenge (Gesamtmenge 20474 g) wurde in den Reaktor dosiert. Das Ethylenvenil wurde geöffnet. Gleichzeitig wurde die Temperatur auf 60 °C erhöht und der Ethylendruck so eingestellt, daß bei 60 °C ein Druck von 42 bar anliegt. Die Gesamtmenge Ethylen betrug 6133 g. Das Ethylenventil wurde erst dann wieder geschlossen, wenn die Gesamtmenge im Reaktor war. Die Dosierungen der Redoxinitiatoren:
5 g Brüggolit FF7 (Reduktionsmittel von Brüggemann) in 1519 g E-Wasser
44,6 g Natriumperoxodisulfat in 1519 g Wasser
und der restlichen Menge an Vinylacetat wurde nach 10 min. Rühren gestartet. Die Länge der Dosierung des Vinylacetats betrug 7,5 Stunden und die der Initatoren 8 Stunden. Dabei wurde der Ethylendruck konstant bei 42 bar gehalten und die Temperatur bei 60 °C. Nach Ende der Vinylacetatdosierung wurde der Ansatz innerhalb 60 Minuten auf 85 °C aufgeheizt und 1 Stunde bei dieser Temperatur gehalten. Zur Restmonomerredüzierung wurde der Ansatz auf 60 °C gekühlt und mit bekannten Redoxsystemen behandelt (z. B. Wasserstoffperoxid / Weinsäure / Mohrsches Salz) und/oder eine physikalische Behandlung durchgeführt.

### Charakteristische Daten der Beispieldispersion 1

| | |
|---|---|
| Trockensubstanz: | 53 % |
| pH (Elektrodenmessung): | 5 |
| Viskosität nach Brookfield (23°C, Spindel 4, 20 rpm): | 5700 mPa*s |
| Restmonomergehalt: | <0,2 % |
| Glasübergangstemperatur des Polymerisats (20 K/min): | 5°C |
| Teilchengrößenverteilung (Mastersizer, polydispers, Mie): | d_{w} = 1,9 µm |
| | d_{w/}dₙ = 4,5 |

### Beispiel 2

In einer 60 I Druckapparatur mit Rührer, Mantelheizung und Dosierpumpen wurde eine wäßrige Lösung, bestehend aus folgenden Bestandteilen vorgelegt:

| | |
|---|---|
| 12143 g | E-Wasser (entionisiertes Wasser) |
| 5862 g | Celvol^{®} 508 (15 %ig in E-Wasser, Polyvinylalkohol der Celanese) |
| 2508 g | Celvol^{®} 523 (15 %ig in E-Wasser, Polyvinylalkohol der Celanese) |
| 111 g | Genapol^{®} T 250 (nichtionischer Emulgator auf Basis eines Ethoxylats von Clariant) |
| 31,7 g | Weinsäure |
| 0,95 g | Eisen-III-Chlorid Lösung (40 %ig in E-Wasser) |
| 5,5 g | Rongalit^{®} C (Natrium-Formaldhyd-Sulfoxylat, BASF) |

Die Polyvinylalkohole wurden zuvor je in einer 15 %igen Lösung bei 90 °C 2 Stunden lang gelöst.

Die Apparatur wurde von Luftsauerstoff befreit. Bei 36 °C wurden 50 % der Vinylacetatmenge (Gesamtmenge: 18367 g) in den Reaktor dosiert. Das Ethylenventil wurde geöffnet und 57 % das Ethylens (Gesamtmenge: 8079 g) in den Reaktor gedrückt. Das Ethylenventil wurde geschlossen. Nach 15 Minuten Gleichgewichtseinstellung wurden jeweils 90 g Reduktionsmittellösung (Gesamtmenge: 85 g Rongalit C in 1909 g E-Wasser) und Oxidationsmittellösung (Gesamtmenge: 97 g 35 %iges Wasserstoffperoxid in 1909 g Wasser) innerhalb 5 Minuten hinzugegeben. Gleichzeitig wurde die Innentemperatur auf 80 °C genommen. Nach Start der Reaktion (exotherme Reaktion) wurde mit den Dosierungen begonnen:
Vinylacetat 8000 g in 90 Minuten; Reduktionsmittellösung und Oxidationsmittellösung in 4 Stunden.

Gleichzeitig wurde die Innentemperatur über eine automatische Regelung der Pumpen für Oxidationsmittel und Reduktionsmittel so gesteuert, daß sie bei 80 °C lag. Die Manteltemperatur wurde fest auf 45 °C eingestellt. Gegen Ende der 4 Stunden Dosierzeit (ca. nach 3 Stunden) nahm die Dosiergeschwindigkeit stark zu und evtl. wurde die Manteltemperatur auf bis zu 75 °C in einer Rampe angehoben, um die 80 °C Innentemperatur zu halten. Nach Ende der Vinylacetatdosierung wurde der Rest (1183 g) mit einer Rate von 3,55 kg/h hinzudosiert. Nach Ende der Dosierungen würde noch 1 Stunde bei 65 °C nachpolymerisiert. Im Anschluß wurde bei 65 °C zur Restmonomerenreduktion ein Redoxverfahren angeschlossen (z. B. Wasserstoffperoxid / t-Butylhydroperoxyd / Rongalit C / Eisen-III-Chlorid) und/oder es wurde eine physikalische Behandlung durchgeführt.

### Charakteristische Daten der Beispieldispersion 2

| | |
|---|---|
| Trockensubstanz: | 51 % |
| pH (Elektrodenmessung): | 3 |
| Viskosität nach Brookfield (23°C, Spindel 4, 20 rpm): | 5300 mPa*s |
| Restmonomergehalt: | <0,2 % |
| Glasübergangstemperatur des Polymerisats (20 K/min): | -5°C |
| Teilchengrößenverteilung (Mastersizer, polydispers, Mie): | d_{w} = 2,5 µm |
| | d_{w}/dₙ = 14 |

### Beispiel 3 (Vergleich):

Handelsübliche VAE (Vinylacetat-Ethylen) Dispersion, die nur mit Polyvinylalkohol (PVOH) stabilisiert ist.

### Charakteristische Daten der Vergleichsdispersion 3

| | |
|---|---|
| Trockensubstanz: | 55 % |
| pH (Elektrodenmessung): | 4 |
| Viskosität nach Brookfield (23°C, Spindel 4, 20 rpm): | 4000 mPa*s |
| Restmonomergehalt: | <0,2 % |
| Glasübergangstemperatur des Polymerisats (20 K/min): | 7 °C |
| Teilchengrößenverteilung (Mastersizer, polydispers, Mie): | d_{w} = 0,86 µm |
| | d_{w}/dₙ = 2,26 |

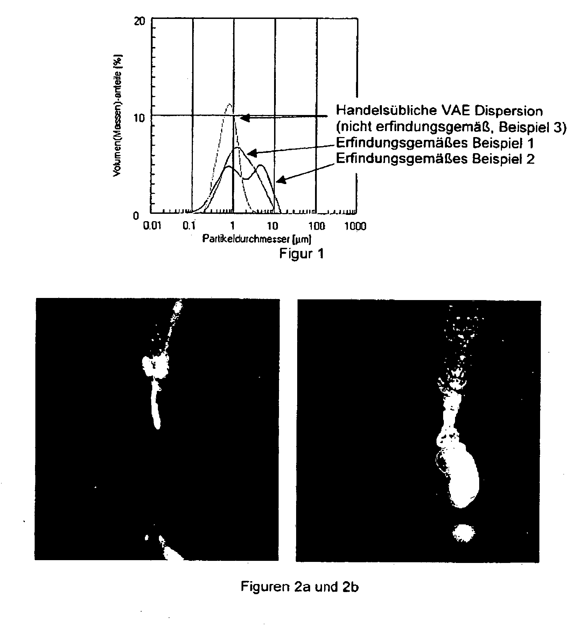

In der Figur 1 ist die Teilchengrößenverteilung der Dispersionen der Beispiele 1 bis 3 dargestellt. Man erkennt die breiten Teilchengrößeverteilungen der beiden erfindungsgemäßen Dispersionen im Vergleich zur relativ engen Verteilung der VAE-Dispersion des Standes der Technik.

### Beispiel 4: Anwendung an der Düse und Klebstoffeigenschaften

### 1. Aufbau

Die Applikation auf ein schnelllaufendes Förderband wurde im Labor durch Applikation auf eine schnelldrehende Edelstahlwalze simuliert. Die Walze hatte einen Durchmesser von ca. 26 cm und wurde mit einer Geschwindigkeit von 100 m/min gedreht. Senkrecht über der Walze befand sich eine Vorrichtung mit 3 Leimauftragsdüsen. Diese wurden mittels eines Schlauchleitungs-systems über eine Kolbenpumpe (Druck 5-40 bar, in den Versuchen wurden 10 bar verwendet) mit dem Klebstoff versorgt. Der Abstand zwischen der Düse und der Walze betrug 4 mm. Die Leimauftragsdüsen (z. B. hhs, D-Ventil) wurden über ein elektronisches Steuerungsgerät angesteuert. Es wurde das Profil einer Seitennahtverklebung einer Faltschachtel mit 12 cm Länge simuliert. Es wurden 12 Leimpunkte in einer Reihe aufgetragen. Die Öffnungsdauer des Ventils betrugt 4 ms und die geschlossene Zeit zwischen 2 Punkten betrug 2 ms. Die Gesamtdauer einer Reihe mit insgesamt 12 Leimpunkten war somit 70 ms.

Eine Sequenz bestand aus 4 Reihen, bei der zwischen den einzelnen Reihen eine Pause von 55,3 ms herrschte (zur Simulation des Abstands zwischen 2 Substraten auf dem Förderband). Zwischen 2 Sequenzen bestand eine Pause von 165,6 ms.

Dieses Profil wurde über einen Zeitraum von 2 Stunden gefahren und im Abstand von 15 min. wurde mittels digitaler Bildanalyse der zapfenförmige Aufbau an der Düse gemessen. Die Dispersion wurde für diese Messungen soweit verdünnt, daß sie eine Viskosität von etwa 1000 mPa*s zeigte. Das Ergebnis ist der Aufbau in mm über die Zeit in Minuten.

### 2. Tailing

Das Tailing wurde durch digitale Bildanalyse der auf die Edelstahlwalze applizierten Tropfen mittels einer Hochgeschwindigkeitskamera bestimmt. Die Applikation bei diesem Experiment lief im Prinzip analog wie unter 1 beschrieben, nur war die Laufgeschwindigkeit der Walze 250 m/min und der Abstand der Düse zur Walze betrug 10 mm. Die Taktsequenz der Düse betrug für einen Leimpunkt 4 ms und zwischen 2 Leimpunkten 3,4 ms . Das Ergebnis gibt den in Längsrichtung ausgemessenen Tropfen vom "Kopf bis zum "Schwanz" an.

### 3. Manuelle Abbindegeschwindigkeit

3.1 Auf der satinierten Seite eines auf 40 cm Länge und 10 cm Breite zugeschnittenen Kartons, z.B. GD1 Juwel Top (250 g/m²), der mit einer cm Skalierung versehen wurde, wurde mit Hilfe eines Spaltrakels (50 µm Naßfilm) der Klebstoff aufgetragen.
3.2 Direkt nach dem Aufziehen des Klebstoffes wurde ein auf 55 cm Länge und 5 cm Breite zugeschnittener Papierstreifen, z.B. Natronkraftpapier (80 g/m²), auf den Klebstofffilm gelegt und durch Anpressen mittels einer Handrolle verklebt.
3.3 Unmittelbar nach Fertigstellung der Verklebung wurde der Papierstreifen per Hand in einer Geschwindigkeit von ca. 1 cm/s von dem Karton abgeschält bis es zu einem deutlich sichtbaren Faserausriß kam.
3.4 Durch die vorgenommene Skalierung des Kartonstreifens war es nun möglich, die zurückgelegte Strecke bis zum Beginn des Faserausrisses mit einer Zeit zu korrelieren (1 cm entspricht 1 s). Dieser Wert entsprach der Abbindezeit des Klebstoffes und wurde angegeben.

### 4. Verklebung von Substraten (UV lackierten Papieren)

Die mit UV Lack beschichteten Papiersubstrate wurden mit einem 100 µm Nassauftrag des Klebstoffes und einer Breite von 4 cm auf der beschichteten Seite beschichtet. Die Substrate können zum Beispiel Papiere der Firma Weilburger Graphics GmbH sein, UV 360040/49 = hohes Molekulargewicht, UV 360050/59 niedriges Molekulargewicht). Die Verklebung wurde in verschiedenen Varianten ausgeführt: 1. Verklebung Face to Face (beschichtete Seite mit der beschichteten Seite), 2. Verklebung Face to Back (beschichtete Seite mit der unbeschichteten Seite). Die Substrate wurden ca. 2 min mit einem 1 kg Gewicht belastet und anschließend mindestens 3 Tage im Klimaraum bei 23 °C und 50 % rel. Luftfeuchte gelagert. Die Qualität der Verklebung wurde durch manuelles Auseinanderschälen der verklebten Substrate bewertet (Faserriß in %).

### 5. Wärmestand

Die satinierte Seite eines Natronkraftpapiers (Glockpapier, 70 g /cm²), welches zuvor mit 75 µm Nassauftrag des Klebstoffes in einer Breite von 1 cm beschichtet worden war, wurde auf die nicht satinierte Seite des Natronkraftpapiers verklebt. Die verklebten Substrate wurden ca. 2 min. mit 1 kg Gewicht belastet und dann 24 h bei Raumtemperatur gelagert. Anschließend wurden von dem Papierverbund 2,5 cm breite Streifen geschnitten. Die Streifen wurden mit 200 g belastet und bei 30 °C in den Trockenschrank gehängt. Die Temperatur wurde alle 30 min um 5 °C erhöht. Der Wärmestand entsprach der Temperatur bei der der Teststreifen noch gehalten wird. Der maximale Wert war 110 °C.

**Tabelle 1: Ergebnisse aus Beispiel 4**

| Dispersion aus Beispiel | Verhalten an der Düse | | Klebstoffeigenschaften | | | Teilchengröße n -Verteilung | |
|---|---|---|---|---|---|---|---|
| | Aufbau (mm/h) | Tailing (mm) | Manuelle Abbindegeschwindigkeit (s) | Verklebung von UV lackierten Papieren (UV 360050 / 59) | Wärmestand d | d_{w} in µm | d_{w}/dₙ |
| 1 (Erfindungsgemäß) | 1,5 | 14,0 | 18 | - (0 % Faserriß) | 70 °C | 1,9 | 4,87 |
| 2 (Erfindungsgemäß) | 0,7 | 10,6 | 17 | + (100 % Faserriß) | > 100 °C | 2,53 | 14,1 |
| 3 (Referenz) | 4 (Düse verstopft) | 14,6 | 18 | - (0 % Faserriß) | > 100 °C | 0,86 | 2,26 |

Die erfindungsgemäßen Beispiele 1 und 2 zeigen an der Düse nur einen sehr kleinen Aufbau, hingegen zeigt die Referenzdispersion nach 1 Stunde bereits einen Aufbau von > 4 mm. Das Tailing ist vergleichbar zum Stand der Technik. Die Klebstoffeigenschaften in den erfindungsgemäßen Beispielen können so eingestellt werden, dass sie sehr gut auch auf unpolaren und schwierig zu verklebenden Substraten kleben und ohne dass der Wärmestand beeinträchtigt wird (Beispiel 2).

Selbst nach Zugabe von 5 % Weichmacher (Benzoflex 2088) im erfindungsgemäßen Beispiel 2, welcher die Verklebung auf hochmolekularem UV Lack verbessert, führt noch zu einem Wärmestand von 100 °C.

Das Tailing der getesteten Dispersionen wird in Figuren 2a und 2b dargestellt. Figur 2a zeigt das Verhalten der erfindungsgemäßen Dispersionen der Beispiele 1 bzw. 2. Nach 2 Stunden zeigte sich ein Aufbau von 1,5 mm und die Düse ist noch nicht verstopft. Zusätzlich ist die Form des Aufbaus nicht so störend wie im Referenzfall, weil der Klebstoffstrahl nicht unkontrolliert abgelenkt wird.

Figur 2b zeigt die Verschmutzung an der Düse bei der Referenz Dispersion (Beispiel 3, verstopft nach < 60 min)

## Patentansprüche

1. Verwendung einer wässrigen Vinylestercopolymer-Dispersion enthaltend eine Mischung von Polyvinylalkoholen als Schutzkolloid in Kombination mit mindestens einem nichtionischen Emulgator, wobei eine Mischung von Polyvinylalkoholen unterschiedlicher Molekulargewichte eingesetzt wird, wovon ein Polyvinylalkohol einen Verseifungsgrad von 70 bis 100 mol % aufweist und dessen 4 %-ige wässrige Lösung eine Viskosität bei 20 °C von 18 bis 60 mPa*s aufweist und ein weiterer Polyvinylalkohol einen Verseifungsgrad von 70 bis 100 mol % aufweist und dessen 4 %-ige wässrige Lösung eine Viskosität bei 20 °C von 2 bis 18 mPa*s aufweist, die eine Viskosität von kleiner als 8000 mPa*s, gemessen mit einem Brookfield-Viskosimeter bei 23°C, Spindel Nr. 5 bei 20 Upm, ein Gewichtsmittel d_{w} der Teilchengrößen (Laserbeugung) von 0,5 bis 10 µm und einen Quotienten von Gewichtsmittel zu Zahlenmittel der Teilchengrößen d_{w}/dₙ von mindestens 2,5 aufweist und das Polymere eine Glasübergangstemperatur (zweite Aufheizkurve, 20K/min) zwischen -30 und +15°C besitzt, als Klebstoff zur punktuellen oder strichförmigen Düsenapplikation auf Substrate.

2. Verwendung einer wässrigen Vinylestercopolymer-Dispersion nach Anspruch 1, **dadurch gekennzeichnet, dass** deren Viskosität 100 bis 8000 mPa*s, insbesondere 200 bis 4000 mPa*s und ganz besonders bevorzugt 400 bis 2000 mPa*s beträgt.

3. Verwendung einer wässrigen Vinylestercopolymer-Dispersion nach Anspruch 1, **dadurch gekennzeichnet, dass** deren Gewichtsmittel der Teilchengrößen d_{w} 0,5 bis 6,0 µm, insbesondere 0,7 bis 5,0 µm, beträgt und dass deren Quotient d_{w}/dₙ 2,5 bis 20,0, insbesondere 3,0 bis 15,0, beträgt.

4. Verwendung einer wässrigen Vinylestercopolymer-Dispersion nach Anspruch 1, **dadurch gekennzeichnet, dass** das Polymere eine Glasübergangstemperatur zwischen -20 und +5 °C besitzt.

5. Verwendung einer wässrigen Vinylestercopolymer-Dispersion nach Anspruch 1, **dadurch gekennzeichnet, dass** diese sich von mindestens einem Vinylester-Copolymer ableitet, das durch Emulsionspolymerisation von
A1) Vinylestern von aliphatischen, gesättigten Carbonsäuren mit einer Kettenlänge von C₁-C₄,
A2) alpha-Olefinen mit 2 bis 8 C-Atomen, und/oder
A3) Vinylestern von aliphatischen, gesättigten Carbonsäuren mit einer Kettenlänge von C₅-C₁₈, insbesondere Vinylestern von α-verzweigten Carbonsäuren mit 5 bis 11 Kohlenstoffatomen im Säurerest, erhältlich ist,
wobei in den Copolymeren abgeleitet von den Monomeren A1 und A2 oder A1 und A2 und A3 oder A1 und A3 die Summe der Monomeren der Typen A1, A2 und/oder A3 100 Gew.% ergeben.

6. Verwendung einer wässrigen Vinylestercopolymer-Dispersion nach Anspruch 5, **dadurch gekennzeichnet, dass** diese sich von mindestens einem Vinylester-Copolymer ableitet, das durch Emulsionspolymerisation der Monomeren A1, A2 und/oder A3 sowie A4 und/oder A5 erhältlich ist, wobei
A4) Ester von ethylenisch ungesättigten Mono- oder Dicarbonsäuren, insbesondere von Acrylsäure und/oder von Methacrylsäure und/oder von Maleinsäure, mit einwertigen gesättigten Alkoholen, und
A5) weitere Comonomeren, welche nicht in eine der Gruppen A1 bis A4) fallen, bedeuten,
wobei in den Copolymeren abgeleitet von den Monomeren A1, A2 und A4 oder A1, A2 und A5 oder A1, A2, A4 und A5 oder A1, A2, A3 und A4 oder A1, A2, A3 und A5 oder A1, A2, A3, A4 und A5 oder A1, A3 und A4 oder A1, A3 und A5 oder A1, A3, A4 und A5 die Summe der Monomeren der Typen A1, A2 und/oder A3 und/oder A4 und/oder A5 100 Gew.-% ergeben.

7. Verwendung einer wässrigen Vinylestercopolymer-Dispersion nach Anspruch 5 oder 6, **dadurch gekennzeichnet, dass** diese Polyvinylacetat-Ethylen-Copolymere enthält oder Polyvinylacetat-Ethylen-Copolymere, die zusätzlich 0,5 bis 40 Gewichtsteile von Estern der Acrylsäure und/oder von Estern der Methacrylsäure und/oder von Diestern der Maleinsäure mit einwertigen gesättigten Alkholen, insbesondere von Butylacrylat und/oder von 2-Ethylhexylacrylat und/oder von Dibutylmaleinat und/oder Dioctylmaleinat, einpolymerisiert erhalten.

8. Verwendung einer wässrigen Vinylestercopolymer-Dispersion nach Anspruch 7, **dadurch gekennzeichnet, dass** diese Polyvinylacetat-Ethylen-Copolymere enthält.

9. Verwendung einer wässrigen Vinylestercopolymer-Dispersion nach einem der Ansprüche 1 bis 8, **dadurch gekennzeichnet, dass** diese eine Fließgrenze von 0,2 bis 1,0 Pa aufweist.

10. Verwendung einer wässrigen Vinylestercopolymer-Dispersion nach Anspruch 9, **dadurch gekennzeichnet, dass** die Fließgrenze 0,3 bis 0,6 Pa beträgt.

11. Verwendung nach Anspruch 1, **dadurch gekennzeichnet, dass** die Substrate hydrophobe Substrate sind, insbesondere UV lackierte Papieroberflächen und/oder Kunststofffolien.

12. Verwendung nach Anspruch 1, **dadurch gekennzeichnet, dass** der Klebstoff mittels Klebstoffstrahlen mit Durchmessern von kleiner als 6 mm, insbesondere mit Durchmessern von 0,1 bis 2 mm appliziert wird.

13. Verwendung nach Anspruch 1, **dadurch gekennzeichnet, dass** der Klebstoff zur Verklebung von Papier in der Fließbandfertigung von Faltschachteln, Briefumschlägen, Prospekten und Zigaretten eingesetzt wird, insbesondere zur Herstellung von Papier-Papier-Verklebungen oder von Papier-Kunststofffolie-Verklebungen.

## Claims

1. The use of an aqueous vinyl ester copolymer dispersion comprising a mixture of polyvinyl alcohols as protective colloid combined with at least one nonionic emulsifier, wherein a mixture of polyvinyl alcohols having different molecular weights is used, wherein one polyvinyl alcohol has a degree of hydrolysis of 70 to 100 mol% and its 4 % strength aqueous solution has a viscosity at 20°C of 18 to 60 mPa*s and wherein a further polyvinyl alcohol has a degree of hydrolysis of 70 to 100 mol% and its 4 % strength aqueous solution has a viscosity at 20°C of 2 to 18 mPa*s, said dispersion having a viscosity of less than 8000 mPa*s, measured with a Brookfield viscosimeter at 23°C, spindle No. 5 at 20 rpm, a weight average d_{w} of the particle sizes (laser diffraction) of 0.5 to 10 µm, and a ratio of weight average to number average of the particle sizes, d_{w}/dₙ, of at least 2.5, and the polymer possessing a glass transition temperature (second heating curve) of between -30 and +15°C as an adhesive for dotwise or linear nozzle application to substrates.

2. The use of an aqueous vinyl ester copolymer dispersion as claimed in claim 1, whose viscosity is 100 to 8000 mPa*s, more particularly 200 to 4000 mPa*s, and very preferably 400 to 2000 mPa*s.

3. The use of an aqueous vinyl ester copolymer dispersion as claimed in claim 1, whose weight average of the particle sizes, d_{w}, is 0.5 to 6.0 µm, more particularly 0.7 to 5.0 µm, and whose ratio d_{w}/dₙ is 2.5 to 20.0, more particularly 3.0 to 15.0.

4. The use of an aqueous vinyl ester copolymer dispersion as claimed in claim 1, wherein the polymer possesses a glass transition temperature of between -20 and +5°C.

5. The use of an aqueous vinyl ester copolymer dispersion as claimed in claim 1, wherein this is derived from at least one vinyl ester copolymer obtainable by emulsion polymerization of
A1) vinyl esters of aliphatic, saturated carboxylic acids having a chain length of C₁-C₄,
A2) alpha-olefins having 2 to 8 carbon atoms, and/or
A3) vinyl esters of aliphatic, saturated carboxylic acids having a chain length of C₅-C₁₈, more particularly vinyl esters of α-branched carboxylic acids having 5 to 11 carbon atoms in the acid radical,
in the copolymers derived from the monomers A1 and A2 or A1 and A2 and A3 or A1 and A3, the sum of the monomers of types A1, A2 and/or A3 making 100% by weight.

6. The use of an aqueous vinyl ester copolymer dispersion as claimed in claim 5, wherein this is derived from at least one vinyl ester copolymer obtainable by emulsion polymerization of the monomers A1, A2 and/or A3 and also A4 and/or A5, with
A4) being esters of ethylenically unsaturated monocarboxylic or dicarboxylic acids, more particularly of acrylic acid and/or of methacrylic acid and/or of maleic acid, with monohydric saturated alcohols, and
A5) being further comonomers which do not fall within one of groups A1 to A4),
and, in the copolymers derived from the monomers A1, A2 and A4 or A1, A2 and A5 or A1, A2, A4 and A5 or A1, A2, A3 and A4 or A1, A2, A3 and A5 or A1, A2, A3, A4 and A5 or A1, A3 and A4 or A1, A3 and A5 or A1, A3, A4 and A5, the sum of the monomers of types A1, A2 and/or A3 and/or A4 and/or A5 making 100% by weight.

7. The use of an aqueous vinyl ester copolymer dispersion as claimed in claim 5 or 6, wherein this comprises polyvinyl acetate-ethylene copolymers or polyvinyl acetate ethylene copolymers which further contain, in copolymerized form, 0.5 to 40 parts by weight of esters of acrylic acid and/or of esters of methacrylic acid and/or of diesters of maleic acid with monohydric saturated alcohols, more particularly butyl acrylate and/or 2-ethylhexyl acrylate and/or dibutyl maleate and/or dioctyl maleate.

8. The use of an aqueous vinyl ester copolymer dispersion as claimed in claim 7, wherein this comprises polyvinyl acetate-ethylene copolymers.

9. The use of an aqueous vinyl ester copolymer dispersion as claimed in any one of claims 1 to 8, wherein this has a yield point of 0.2 to 1.0 Pa.

10. The use of an aqueous vinyl ester copolymer dispersion as claimed in claim 9, wherein the yield point is 0.3 to 0.6 Pa.

11. The use as claimed in claim 1, wherein the substrates are hydrophobic substrates, more particularly UV-coated paper surfaces and/or polymeric films.

12. The use as claimed in claim 1, wherein the adhesive is applied by means of adhesive jets having diameters of less than 6 mm, more particularly having diameters of 0.1 to 2 mm.

13. The use as claimed in claim 1, wherein the adhesive is used for bonding paper in the production-line fabrication of folding boxes, envelopes, brochures, and cigarettes, more particularly for producing paper/paper bonds or paper/polymeric film bonds.

## Revendications

1. Utilisation d'une dispersion aqueuse d'un copolymère d'esters vinyliques contenant un mélange de poly(alcools vinyliques) comme colloïde protecteur en combinaison avec au moins un émulsifiant non ionique, dans lequel un mélange de poly(alcools vinyliques) ayant différentes masses moléculaires est utilisé dont l'un des poly(alcools vinylique)s présente un indice de saponification de 70 à 100% en moles, et sa solution aqueuse à 4% présente une viscosité à 20°C de 18 à 60 mPa.s, et un autre poly(alcool vinylique) présente un indice de saponification de 70 à 100% en moles, et sa solution aqueuse à 4% présente une viscosité à 20°C de 2 à 18 mPa.s, laquelle dispersion présente une viscosité, mesurée avec un viscosimètre Brookfield à 23°C, broche n° 5 à 20 tr/min, inférieure à 8 000 mPa.s, une granulométrie moyenne en poids d_{w} (diffraction laser) de 0,5 à 10 µm, et un rapport d_{w}/dₙ entre la granulométrie moyenne en poids et la granulométrie moyenne en nombre d'au moins 2,5, le polymère présentant une température de transition vitreuse (deuxième courbe de montée en température, 20 K/min) comprise entre -30 et +15°C en tant qu'adhésif pour application ponctuelle ou linéaire à travers une buse sur des substrats.

2. Utilisation d'une dispersion aqueuse d'un copolymère d'esters vinyliques selon la revendication 1, **caractérisée en ce que** sa viscosité est de 100 à 8 000 mPa.s, en particulier de 200 à 4 000 mPa.s et d'une manière tout particulièrement préférée de 400 à 2 000 mPa.s.

3. Utilisation d'une dispersion aqueuse d'un copolymère d'esters vinyliques selon la revendication 1, **caractérisée en ce que** sa granulométrie moyenne en poids d_{w} est de 0,5 à 6,0 µm, en particulier de 0,7 à 5,0 µm, et que le rapport d_{w}/dₙ est de 2,5 à 20,0, en particulier de 3,0 à 15,0.

4. Utilisation d'une dispersion aqueuse d'un copolymère d'esters vinyliques selon la revendication 1, **caractérisée en ce que** le polymère présente une température de transition vitreuse comprise entre -20 et +5°C.

5. Utilisation d'une dispersion aqueuse d'un copolymère d'esters vinyliques selon la revendication 1, **caractérisée en ce qu'**elle dérive d'au moins un copolymère d'esters vinyliques qui peut être obtenu par polymérisation en émulsion
A1) d'esters vinyliques d'acides carboxyliques aliphatiques saturés ayant une longueur de chaîne en C₁-C₄,
A2) d'alpha-oléfines ayant 2 à 8 atomes de carbone, et/ou
A3) d'esters vinyliques d'acides carboxyliques aliphatiques saturés ayant une longueur de chaîne en C₅-C₁₈, en particulier d'esters vinyliques d'acides carboxyliques α-ramifiés ayant 5 à 11 atomes de carbone dans le résidu acide,
où, dans les copolymères obtenus à partir des monomères A1 et A2, ou A1 et A2 et A3, ou A1 et A3, la somme des monomères des types A1, A2 et/ou A3 est de 100% en poids.

6. Utilisation d'une dispersion aqueuse d'un copolymère d'esters vinyliques selon la revendication 5, **caractérisée en ce qu'**elle dérive d'au moins un copolymère d'esters vinyliques qui peut être obtenu par polymérisation en émulsion des monomères A1, A2 et/ou A3, ainsi que A4 et/ou A5, où
A4) représente des esters d'acides mono- ou dicarboxyliques à insaturation éthylénique, en particulier de l'acide acrylique et/ou de l'acide méthacrylique et/ou de l'acide maléique, et de monoalcools saturés, et
A5) représente d'autres comonomères qui n'entrent pas dans l'un des groupes A1 à A4),
où, dans les copolymères obtenus à partir des monomères A1, A2 et A4, ou A1, A2 et A5, ou A1, A2, A4 et A5, ou A1, A2, A3 et A4, ou A1, A2, A3 et A5, ou A1, A2, A3, A4 et A5, ou A1, A3 et A4, ou A1, A3 et A5, ou A1, A3, A4 et A5, la somme des monomères du type A1, A2 et/ou A3 et/ou A4 et/ou A5 est de 100% en poids.

7. Utilisation d'une dispersion aqueuse d'un copolymère d'esters vinyliques selon la revendication 5 ou 6, **caractérisée en ce qu'**elle contient des copolymères poly(acétate de vinyle-éthylène) ou des copolymères poly(acétate de vinyle-éthylène), qui contiennent en outre, à l'état polymérisé, 0,5 à 40 parties en poids d'esters de l'acide acrylique et/ou d'esters de l'acide méthacrylique et/ou de diesters de l'acide maléique et de monoalcools saturés, en particulier d'acrylate de butyle et/ou d'acrylate de 2-éthylhexyle et/ou de maléate de dibutyle et/ou de maléate de dioctyle.

8. Utilisation d'une dispersion aqueuse d'un copolymère d'esters vinyliques selon la revendication 7, **caractérisée en ce qu'**elle contient des copolymères poly(acétate de vinyle-éthylène).

9. Utilisation d'une dispersion aqueuse d'un copolymère d'esters vinyliques selon l'une des revendications 1 à 8, **caractérisée en ce qu'**elle présente une limite de fluage de 0,2 à 1,0 Pa.

10. Utilisation d'une dispersion aqueuse d'un copolymère d'esters vinyliques selon la revendication 9, **caractérisée en ce que** la limite de fluage est de 0,3 à 0,6 Pa.

11. Utilisation selon la revendication 1, **caractérisée en ce que** les substrats sont des substrats hydrophobes, en particulier des surfaces de papier et/ou des feuilles plastiques vernies aux UV.

12. Utilisation selon la revendication 1, **caractérisée en ce que** l'adhésif est appliquée à l'aide de jets d'adhésifs ayant un diamètre inférieur à 6 mm, en particulier un diamètre de 0,1 à 2 mm.

13. Utilisation selon la revendication 1, **caractérisée en ce que** l'adhésif est utilisé pour coller du papier dans le cadre d'une fabrication sur chaîne de production de caisses pliantes, d'enveloppes de lettres, de prospectus et de cigarettes, en particulier pour la fabrication de collages papier-papier ou de collages papier-feuille plastique.
